# EUROPÄISCHE PATENTSCHRIFT

(11) **EP 3 121 028 B1**
(45) Veröffentlichungstag und Bekanntmachung des Hinweises auf die Patenterteilung: **12.09.2018**
(21) Anmeldenummer: 16176540.9
(22) Anmeldetag: 28.06.2016
(51) Int. Cl.: B44B 5/02, G03H 1/02, G03H 1/18, B42D 25/328, B42D 25/425, B41C 1/08

(54) **VERFAHREN ZUM HERSTELLEN EINER PLATTE ZUR ERZEUGUNG VON HOLOGRAMMEN**
METHODS FOR MANUFACTURING A PLATE FOR CREATING HOLOGRAMS
PROCÉDÉS DE FABRICATION D'UNE PLAQUE DESTINÉE À RÉALISER DES HOLOGRAMMES

(30) Priorität: 15.07.2015 DE 102015213236
(43) Veröffentlichungstag der Anmeldung: 25.01.2017
(73) Patentinhaber: Heidelberger Druckmaschinen AG, 69115 Heidelberg (DE)
(72) Erfinder: Schmitt-Lewen, Dr. Martin, 69118 Heidelberg (DE); Buck, Dr. Bernhard, 69126 Heidelberg (DE); Thelen, Michael, 68766 Hockenheim (DE)

(56) Entgegenhaltungen:
- EP-A2- 2 724 864
- WO-A1-98/11472
- WO-A1-2006/037852
- DE-A1- 19 722 575
- DE-A1-102007 062 123
- DE-A1-102008 008 685
- DE-A1-102010 019 766

## Beschreibung

Vorliegende Erfindung betrifft ein Herstellungsverfahren, bei dem eine Platte zum Herstellen von Hologrammen oder anderen Licht beugenden oder diffraktiven Mikrostrukturen auf bahn- oder bogenförmigen Bedruckstoffen hergestellt wird.

Solche Platten werden auf einem Zylinder, z. B. einem Druckmaschinenzylinder, befestigt, um die Hologramme zu drucken oder prägen. Die Hologramme können Sicherheitsmerkmale von Produktverpackungen sein.

DE 102007062123A1 zeigt eine Werkzeugform zum Erzeugen einer Mikrostruktur.

WO 9811472A1 zeigt ein System für regionales Ätzen von holografischen Mikroätzungen, wobei eine Druckplatte die Mikroätzungen auf einem Hochdruckrelief aufweist.

DE 102010019766A1 zeigt ein Verfahren zur Erzeugung einer Mikrostruktur auf einem Träger unter Verwendung einer Donorfolie und Akzeptorfolie.

DE102013016117A1 zeigt eine als Silikonshim bezeichnete Silikonplatte mit einer mikroprägenden Struktur für Hologramme.

Aufgabe der Erfindung ist es, ein zum Herstellen einer zum Herstellen von partiellen Hologrammen, sogenannten Spot-Hologrammen, geeigneten Platte geeignetes Verfahren anzugeben.

Die Aufgabe wird durch Herstellungsverfahren mit den Merkmalen der Ansprüche 1, 3 und 5 gelöst.

Weiterbildungen der Erfindung ergeben sich aus der folgenden Beschreibung von Ausführungsbeispielen und der zugehörigen Zeichnung, worin zeigt:
- Figur 1: ein Walzwerk beim Herstellen einer Platte zum Herstellen von Hologrammen,
- Figur 2: eine hergestellte Platte ohne Montageträgerschicht,
- Figur 3: eine hergestellte Platte mit Montageträgerschicht und
- Figur 4: eine Primärplatte zum Herstellen der Platte.

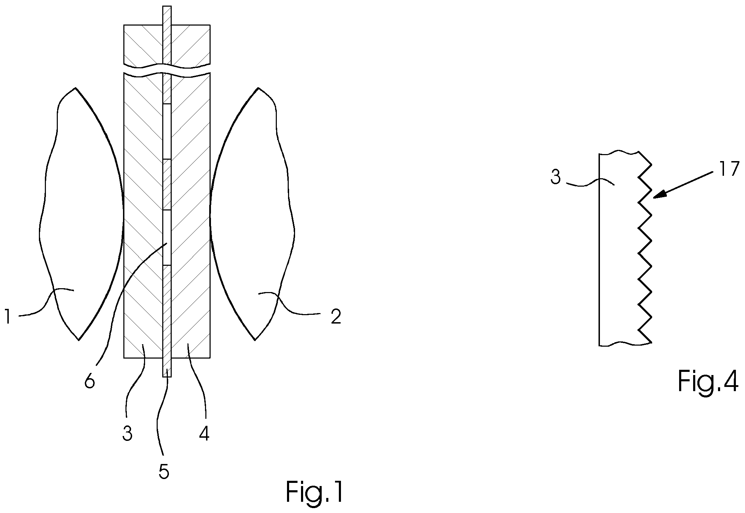

In den Figuren 1 bis 4 sind einander entsprechende Elemente mit den gleichen Bezugszeichen bezeichnet.

Figur 1 zeigt ein Walzwerk mit einer ersten Walze 1 und einer zweiten Walze 2, zwischen denen ein Stapel zusammengepresst wird, der aus einer Primärplatte 3, einem plattenförmigen Rohling 4 und dazwischen einer folienförmigen Schablone 5 und einem filmförmigen Fluid 6 besteht. Das Fluid ist ein aushärtbares Silikonmaterial. Der Rohling 4 besteht aus mehreren aufeinanderliegenden Schichten, was in Figur 1 nicht erkennbar ist.

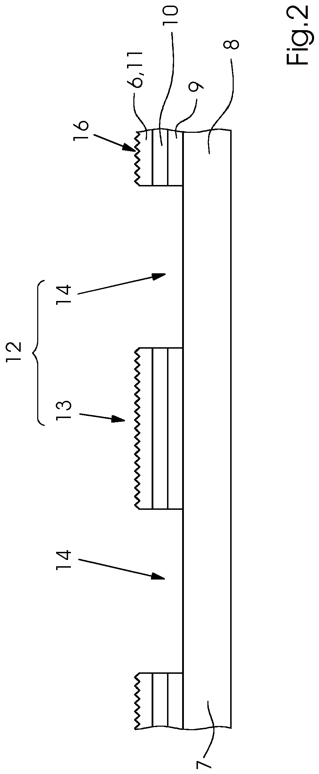

Figur 2 zeigt eine erste Aufbauvariante einer Platte 7 zum Herstellen von Hologrammen auf bahn- oder bogenförmigen Bedruckstoffen. Die Platte 7, welche auch als Sekundärplatte bezeichnet werden kann, ist aus dem Rohling 4 (vgl. Figur 1) hergestellt worden und umfasst eine Grundträgerschicht 8, darauf eine oder mehrere Zwischenschichten 9, darauf eine Vermittlerschicht 10 und darauf als Deckschicht eine Strukturierungsschicht 11. Die Schichten 8, 9, 10, 11 bestehen aus verschiedenen Materialien. Die Platte 7 weist ein druckauftragsspezifisches Hochdruck-Relief 12 auf, das aus vorspringenden Stempeln 13 und dazwischenliegenden Vertiefungen 14 besteht. Die Stempel 13 werden durch die eine oder mehrere Zwischenschichten 9, die Vermittlerschicht 10 und die Strukturierungsschicht 11 gebildet. Im Bereich der Vertiefungen 14 fehlen diese Schichten 9, 10, 11 und ist nur noch die Grundträgerschicht 8 vorhanden. Nur im Bereich der Stempel 13 weist die Platte 7 ein Mikrorelief 16 auf, das in die Strukturierungsschicht 11 eingebracht ist. Die Strukturierungsschicht 11 ist aus dem Fluid 6 gebildet worden.

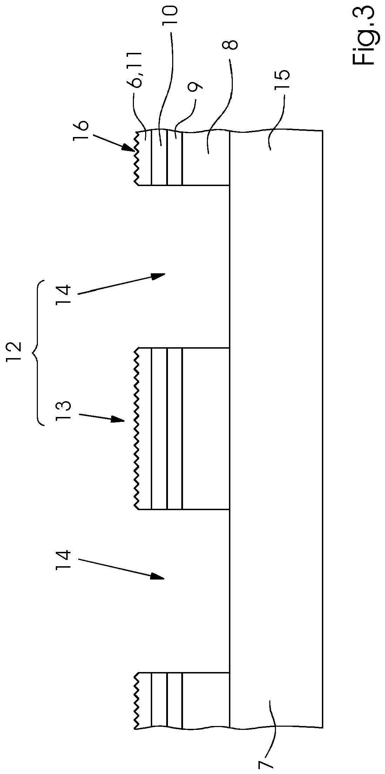

Figur 3 zeigt eine zweite Aufbauvariante der Platte 7 zum Herstellen von Hologrammen auf bahn- oder bogenförmigen Bedruckstoffen. Die Platte 7, welche auch als Sekundärplatte bezeichnet werden kann, ist aus dem Rohling 4 (vgl. Fig. 1) hergestellt worden und umfasst eine Montageträgerschicht 15, darauf die Grundträgerschicht 8, darauf die eine oder mehrere Zwischenschichten 9, darauf die Vermittlerschicht 10 und darauf als Deckschicht die Strukturierungsschicht 11. Die Schichten 8, 9, 10, 11, 15 bestehen aus verschiedenen Materialien. Die Platte 7 weist das druckauftragsspezifische Hochdruck-Relief 12 auf, das aus den vorspringenden Stempeln 13 und den dazwischenliegenden Vertiefungen 14 besteht. Die Stempel 13 werden durch die Grundträgerschicht 8, die eine oder mehrere Zwischenschichten 9, die Vermittlerschicht 10 und die Strukturierungsschicht 11 gebildet. Im Bereich der Vertiefungen 14 fehlen diese Schichten 8, 9, 10, 11 und ist nur noch die Montageträgerschicht 15 vorhanden. Nur im Bereich der Stempel 13 weist die Platte 7 das Mikrorelief 16 auf, das in die Strukturierungsschicht 11 eingebracht ist. Die Strukturierungsschicht 11 ist aus dem Fluid 6 gebildet worden.

Figur 4 zeigt, dass die Primärplatte 3 ein Negativ 17 des Mikroreliefs 16 aufweist. Das Negativ 17 bedeckt die gesamte Primärplatte 3, d. h. es ist nicht druckauftragsspezifisch. Ein Vorteil der Erfindung ist, dass ein und dieselbe Primärplatte 3 zur Herstellung verschiedener Platten für verschiedene Hologramme verschiedener Druckaufträge verwendet werden kann.

Die Herstellung der ersten und zweiten Aufbauvariante der Platte 7 kann nach einer ersten Herstellungsvariante erfolgen. Hierbei wird in einem ersten Schritt der Rohling 4 der Platte 7 mit den Stempeln 13 versehen und werden in einem zweiten Schritt der Rohling 4 und die Primärplatte 3 unter Einschluss des Fluids 6 zwischen dem Rohling 4 und der Primärplatte 3 zusammengepresst und wird dabei zumindest ein Teil des Fluids 6 auf den Rohling 4 aufgetragen und das Negativ 17 ausschließlich in das auf den Stempeln 13 des Hochdruck-Reliefs 12 aufgetragene Fluid 6 abgeformt. In dem ersten Schritt wird der Rohling 4 der Platte7 mit den Stempeln 13 versehen, indem in den Bereichen der Vertiefungen 14 Material abgetragen wird. Das Abtragen des Materials kann durch Anstanzen, Laserbearbeitung oder Ätzen erfolgen. Der zweite Schritt erfolgt in dem Walzwerk, das in Figur 1 dargestellt ist, aber ohne Schablone. Das die Strukturierungsschicht 11 bildende Fluid 6 wird nach dem zweiten Schritt, z. B. durch Bestrahlung, gehärtet, um das Mikrorelief 16 in der Strukturierungsschicht 11 zu fixieren oder verfestigen.

Die Herstellung der ersten und zweiten Aufbauvariante der Platte 7 kann nach einer zweiten Herstellungsvariante erfolgen. Hierbei werden in einem ersten Schritt der Rohling 4 der Platte 7 und die Primärplatte 3 unter Einschluss des Fluids 6 zwischen dem Rohling 4 und der Primärplatte 3 zusammengepresst werden und wird dabei zumindest ein Teil des Fluids 6 auf den Rohling 4 vollflächig aufgetragen und das Negativ 17 in das aufgetragene Fluid 6 abgeformt und wird in einem zweiten Schritt der Rohling 4 mit den Stempeln 13 versehen. Der erste Schritt erfolgt in dem Walzwerk, das in Figur 1 dargestellt ist, aber ohne Schablone. In dem zweiten Schritt wird der Rohling 4 der Platte 7 mit den Stempeln 13 versehen, indem in den Bereichen der Vertiefungen 14 Material abgetragen wird. Das Abtragen des Materials kann durch Anstanzen, Laserbearbeitung oder Ätzen erfolgen. Das die Strukturierungsschicht 11 bildende Fluid 6 wird nach dem ersten Schritt, z. B. durch Bestrahlung, gehärtet, um das Mikrorelief 16 in der Strukturierungsschicht 11 zu fixieren oder verfestigen.

Die Herstellung der ersten und zweiten Aufbauvariante der Platte 7 kann nach einer dritten Herstellungsvariante erfolgen. Hierbei werden beim Abformen des Negativs 17 der Rohling 4 der Platte 7 und die Primärplatte 3 unter Einschluss des Fluids 6 und der Schablone 5 zwischen dem Rohling 4 und der Primärplatte 3 zusammengepresst. Es gibt drei Anordnungsvarianten für die Schablone 5.

Bei der ersten Anordnungsvariante ist die Schablone 5 vor und bei dem Zusammenpressen mit der Primärplatte 3 verbunden und wird die Schablone 5 nach dem Zusammenpressen von der Primärplatte 3 abgelöst. Die Schablone 5 kann durch einen auf die Primärplatte 3 aufgetragenen und darauf gehärteten Lack gebildet werden, der nach der Herstellung der Platte 7 von der Primärplatte 3 wieder abgewaschen wird, um danach für die Herstellung einer anderen Platte für einen anderen Druckauftrag die Primärplatte 3 erneut mit einer druckauftragsspezifischen Schablone aus Lack beschichten zu können. Alternativ kann die Schablone 5 durch eine auf die Primärplatte 3 aufgeklebte Selbstklebefolie gebildet werden, die nach der Herstellung der Platte 7 von der Primärplatte 3 wieder abgezogen wird, um danach für die Herstellung einer anderen Platte für einen anderen Druckauftrag eine andere Selbstklebefolie als Schablone 5 auf die Primärplatte 3 kleben zu können.

Bei der zweiten Anordnungsvariante ist die Schablone 5 vor und bei dem Zusammenpressen mit dem Rohling 4 verbunden und wird die Schablone 5 nach dem Zusammenpressen von dem Rohling 4 abgelöst. Die Schablone 5 kann durch einen auf den Rohling 4 aufgetragenen und darauf gehärteten Lack gebildet werden, der nach der Herstellung der Platte 7 von dem Rohling 4 wieder abgewaschen wird. Alternativ kann die Schablone 5 durch eine auf den Rohling 4 aufgeklebte Selbstklebefolie gebildet werden, die nach der Herstellung der Platte 7 von dem Rohling 4 wieder abgezogen wird.

Bei der dritten Anordnungsvariante ist die Schablone 5 sowohl von der Primärplatte 3 als auch von dem Rohling separat. Die Schablone 5 kann durch eine Folie gebildet werden, die lose zwischen die Primärplatte 3 und den Rohling 4 gelegt wird, um den Stapel (vgl. Figur 1) zu bilden, der beim Zusammenpressen durch das Walzwerk läuft.

Bei allen drei Anordnungsvarianten hat die Schablone 5 eine Dicke, die mit der Höhe der Strukturierungsschicht 11 korrespondiert, und eine oder mehrere Aussparungen, deren Umrisse mit jenen der Stempel 13 korrespondieren. Beim Zusammenpressen wird zumindest ein Teil des Fluids 6 in die Aussparungen der Schablone 5 verdrängt und dort auf den Rohling 4 aufgetragen.

### Bezugszeichenliste

- 1: erste Walze
- 2: zweite Walze
- 3: Primärplatte
- 4: Rohling
- 5: Schablone
- 6: Fluid
- 7: Platte
- 8: Grundträgerschicht
- 9: Zwischenträgerschicht
- 10: Vermittlerschicht
- 11: Strukturierungsschicht
- 12: Hochdruck-Relief
- 13: Stempel
- 14: Vertiefung
- 15: Montageträgerschicht
- 16: Mikrorelief
- 17: Negativ

## Patentansprüche

1. Herstellungsverfahren, bei dem eine Platte (7) zum Herstellen von Hologrammen oder anderen Licht beugenden oder diffraktiven Mikrostrukturen auf bahn- oder bogenförmigen Bedruckstoffen,
umfassend ein Hochdruck-Relief (12), welches aus einem oder mehreren erhabenen Stempeln (13) und einer oder mehreren danebenliegenden Vertiefungen (14) besteht und bei welchem ausschließlich auf den Stempeln (13) ein Mikrorelief (16) zum Drucken oder Prägen der Mikrostruktur angeordnet ist, hergestellt wird, wobei eine Primärplatte (3) ein Negativ (17) des Mikroreliefs (16) aufweist und das Mikrorelief (16) nicht-metallisch ist und durch ein Abformen des Negativs (17) hergestellt wird,
**dadurch gekennzeichnet,**
**dass** in einem ersten Schritt ein Rohling (4) der Platte (7) mit den Stempeln (13) versehen wird und in einem zweiten Schritt der Rohling (4) und die Primärplatte (3) unter Einschluss eines Fluids (6), z. B. eines aushärtbaren Silikonmaterials, zwischen dem Rohling (4) und der Primärplatte (3) zusammengepresst werden und dabei zumindest ein Teil des Fluids (6) auf den Rohling (4) aufgetragen und das Negativ (17) ausschließlich in das auf den Stempeln (13) des Hochdruck-Reliefs (12) aufgetragene Fluid (6) abgeformt wird.

2. Herstellungsverfahren nach Anspruch 1, wobei in dem ersten Schritt der Rohling (4) der Platte (7) mit den Stempeln (13) versehen wird, indem in den Bereichen der Vertiefungen (14) Material abgetragen wird.

3. Herstellungsverfahren, bei dem eine Platte (7) zum Herstellen von Hologrammen oder anderen Licht beugenden oder diffraktiven Mikrostrukturen auf bahn- oder bogenförmigen Bedruckstoffen,
umfassend ein Hochdruck-Relief (12), welches aus einem oder mehreren erhabenen Stempeln (13) und einer oder mehreren danebenliegenden Vertiefungen (14) besteht und bei welchem ausschließlich auf den Stempeln (13) ein Mikrorelief (16) zum Drucken oder Prägen der Mikrostruktur angeordnet ist, hergestellt wird, wobei eine Primärplatte (3) ein Negativ (17) des Mikroreliefs (16) aufweist und das Mikrorelief (16) nicht-metallisch ist und durch ein Abformen des Negativs (17) hergestellt wird,
**dadurch gekennzeichnet,**
**dass** in einem ersten Schritt ein Rohling (4) der Platte (7) und die Primärplatte (3) unter Einschluss eines Fluids (6), z. B. eines aushärtbaren Silikonmaterials, zwischen dem Rohling (4) und der Primärplatte (3) zusammengepresst werden und dabei zumindest ein Teil des Fluids (6) auf den Rohling (4) vollflächig aufgetragen und das Negativ (17) in das aufgetragene Fluid (6) abgeformt wird und in einem zweiten Schritt der Rohling (4) mit den Stempeln (13) versehen wird.

4. Herstellungsverfahren nach Anspruch 3, wobei in dem zweiten Schritt der Rohling (4) der Platte (7) mit den Stempeln (13) versehen wird, indem in den Bereichen der Vertiefungen (14) Material abgetragen wird.

5. Herstellungsverfahren, bei dem eine Platte (7) zum Herstellen von Hologrammen oder anderen Licht beugenden oder diffraktiven Mikrostrukturen auf bahn- oder bogenförmigen Bedruckstoffen,
umfassend ein Hochdruck-Relief (12), welches aus einem oder mehreren erhabenen Stempeln (13) und einer oder mehreren danebenliegenden Vertiefungen (14) besteht und bei welchem ausschließlich auf den Stempeln (13) ein Mikrorelief (16) zum Drucken oder Prägen der Mikrostruktur angeordnet ist, hergestellt wird, wobei eine Primärplatte (3) ein Negativ (17) des Mikroreliefs (16) aufweist und das Mikrorelief (16) nicht-metallisch ist und durch ein Abformen des Negativs (17) hergestellt wird,
**dadurch gekennzeichnet,**
**dass** beim Abformen des Negativs (17) ein Rohling (4) der Platte (7) und die Primärplatte (3) unter Einschluss eines Fluids (6), z. B. eines aushärtbaren Silikonmaterials, und einer Schablone (5) zwischen dem Rohling (4) und der Primärplatte (3) zusammengepresst werden.

6. Herstellungsverfahren nach Anspruch 5, wobei die Schablone (5) vor und bei dem Zusammenpressen mit der Primärplatte (3) verbunden ist und nach dem Zusammenpressen von der Primärplatte (3) abgelöst wird.

7. Herstellungsverfahren nach Anspruch 5, wobei die Schablone (5) vor und bei dem Zusammenpressen mit dem Rohling (4) verbunden ist und nach dem Zusammenpressen von dem Rohling (4) abgelöst wird.

8. Herstellungsverfahren nach Anspruch 5, wobei die Schablone (5) sowohl von der Primärplatte (3) als auch von dem Rohling (4) separat ist.

## Claims

1. Manufacturing process for manufacturing a plate (7) for creating holograms or other light-bending or diffractive microstructures on web-shaped or sheet-shaped printing substrates, the plate (7) comprising a relief (12) for a relief printing process, the relief consisting of one or more raised dies (13) and of one or more adjacent depressions (14) and the relief having a microrelief (16) for printing or embossing the microstructure, the microrelief (16) exclusively disposed on the dies (13),
wherein a primary plate (3) has a negative (17) of the microrelief (16) and wherein the microrelief is non-metallic and created by molding the negative (17)
**characterized in**
**that**, in a first step, a blank (4) of the plate (7) is provided with dies (13) and, in a second step, the blank (4) and the primary plate (3) are pressed together, trapping a fluid (6) such as a curable silicone material between the blank (4) and the primary plate (3), and thereby applying at least a part of the fluid (6) to the blank (4) and molding the negative (17) exclusively into the fluid (6) applied to the dies (13) of the relief (12).

2. Manufacturing process according to claim 1, wherein in the first step, the blank (4) of the plate (7) is provided with the dies (13) by ablating material in the regions of the depressions (14).

3. Manufacturing process for manufacturing a plate (7) for creating holograms or other light-bending or diffractive microstructures on web-shaped or sheet-shaped printing substrates, the plate (7) comprising a relief (12) for a relief printing process, the relief consisting of one or more raised dies (13) and of one or more adjacent depressions (14) and the relief having a microrelief (16) for printing or embossing the microstructure, the microrelief (16) exclusively disposed on the dies (13),
wherein a primary plate (3) has a negative (17) of the microrelief (16) and wherein the microrelief is non-metallic and created by molding the negative (17)
**characterized in**
**that**, in a first step, a blank (4) of the plate (7) and the primary plate (3) are pressed together, trapping a fluid (6) such as a curable silicone material between the blank (4) and the primary plate (3) and, in this process, applying at least a part of the fluid (6) to the entire surface of the blank (4) and molding the negative (17) into the applied fluid (6) and, in a second step, providing the blank (4) with the dies (13).

4. Manufacturing process according to claim 3, wherein, in the second step, the blank (4) of the plate (7) is provided with the dies (13) by ablating material in the regions of the depressions (14).

5. Manufacturing process for manufacturing a plate (7) for creating holograms or other light-bending or diffractive microstructures on web-shaped or sheet-shaped printing substrates, the plate (7) comprising a relief (12) for a relief printing process, the relief consisting of one or more raised dies (13) and of one or more adjacent depressions (14) and said relief having a microrelief (16) for printing or embossing the microstructure, said microrelief (16) exclusively disposed on said dies (13),
wherein a primary plate (3) has a negative (17) of the microrelief (16) and wherein the microrelief is non-metallic and created by molding the negative (17)
**characterized in**
**that** when molding the negative (17), a blank (4) of the plate (7) and the primary plate (3) are pressed together, trapping a fluid (6) such as a curable silicone material and a screen (5) between the blank (4) and the primary plate (3).

6. Manufacturing process according to claim 5, wherein the screen (5) is connected to the primary plate (3) prior to and during the pressing operation and wherein the screen (5) is removed from the primary plate (3) after the pressing operation.

7. Manufacturing process according to claim 5, wherein the screen (5) is connected to the blank (4) prior to and during the pressing operation and wherein the screen (5) is removed from the blank (4) after the pressing operation.

8. Manufacturing process according to claim 5, wherein the screen (5) is separate both from the primary plate (3) and from the blank (4).

## Revendications

1. Procédé de fabrication, pour lequel il y a fabrication d'une plaque (7) pour la réalisation d'hologrammes ou d'autres microstructures déviant les rayons lumineux ou diffractives sur des supports d'impression sous forme de bande ou de feuille, comprenant un relief d'impression (12), composé d'un ou de plusieurs tampons (13) en saillie et d'un ou plusieurs creux (14) adjacents et pour lequel un microrelief (16) pour l'impression ou le gaufrage de la microstructure est exclusivement disposé sur les tampons (13), pour lequel une plaque primaire (3) présente un négatif (17) du microrelief (16) et le microrelief (16) est non métallique et réalisé par un moulage du négatif (17),
**caractérisé par le fait**
**que**, dans une première étape, une préforme (4) de la plaque (7) est dotée des tampons (13) et que, dans une seconde étape, la préforme (4) et la plaque primaire (3) sont comprimés avec inclusion d'un fluide (6), par ex. une matière silicone durcissable, entre la préforme (4) et la plaque primaire (3), au moins une partie du fluide (6) étant appliquée sur la préforme (4) et le négatif (17) étant exclusivement moulé dans le fluide (6) appliqué sur les tampons (13) du relief d'impression (12).

2. Procédé de fabrication selon la revendication 1, pour lequel, durant la première étape, la préforme (4) de la plaque (7) est dotée des tampons (13) par enlèvement de matière dans les zones des creux (14).

3. Procédé de fabrication, pour lequel il y a fabrication d'une plaque (7) pour la réalisation d'hologrammes ou d'autres microstructures déviant les rayons lumineux ou diffractives sur des supports d'impression sous forme de bande ou de feuille, comprenant un relief d'impression (12), composé d'un ou de plusieurs tampons (13) en saillie et d'un ou plusieurs creux (14) adjacents et pour lequel un microrelief (16) pour l'impression ou le gaufrage de la microstructure est exclusivement disposé sur les tampons (13), pour lequel une plaque primaire (3) présente un négatif (17) du microrelief (16) et le microrelief (16) est non métallique et réalisé par un moulage du négatif (17),
**caractérisé par le fait**
**que**, dans une première étape, une préforme (4) de la plaque (7) et la plaque primaire (3) sont comprimées avec inclusion d'un fluide (6), par ex. une matière silicone durcissable, entre la préforme (4) et la plaque primaire (3), au moins une partie du fluide (6) étant appliquée sur toute la surface de la préforme et le négatif (17) étant moulé dans le fluide (6) appliqué et que, dans une seconde étape, la préforme (4) est dotée des tampons (13).

4. Procédé de fabrication selon la revendication 3, pour lequel, durant la seconde étape, la préforme (4) de la plaque (7) est dotée des tampons (13) par enlèvement de matière dans les zones des creux (14).

5. Procédé de fabrication, pour lequel il y a fabrication d'une plaque (7) pour la réalisation d'hologrammes ou d'autres microstructures déviant les rayons lumineux ou diffractives sur des supports d'impression sous forme de bande ou de feuille, comprenant un relief d'impression (12), composé d'un ou de plusieurs tampons (13) en saillie et d'un ou plusieurs creux (14) adjacents et pour lequel un microrelief (16) pour l'impression ou le gaufrage de la microstructure est exclusivement disposé sur les tampons (13), pour lequel une plaque primaire (3) présente un négatif (17) du microrelief (16) et le microrelief (16) est non métallique et réalisé par un moulage du négatif (17),
**caractérisé par le fait**
**que**, lors du moulage du négatif (17), une préforme (4) de la plaque (7) et la plaque primaire (3) sont comprimées avec inclusion d'un fluide (6), par ex. une matière silicone durcissable, et avec un stencil (5) entre la préforme (4) et la plaque primaire (3).

6. Procédé de fabrication selon la revendication 5, pour lequel le stencil (5) est, avant et pendant la compression, lié à la plaque primaire (3) et, après la compression, détaché de la plaque primaire (3).

7. Procédé de fabrication selon la revendication 5, pour lequel le stencil (5) est, avant et pendant la compression, lié à la préforme (4) et, après la compression, détaché de la préforme (4).

8. Procédé de fabrication selon la revendication 5, pour lequel le stencil (5) est séparé de la plaque primaire (3) comme de la préforme (4).
